**Europäisches Patentamt**

**European Patent Office**

**Office européen des brevets**

(11) Veröffentlichungsnummer: **0 178 512**
**B1**

(12) **EUROPÄISCHE PATENTSCHRIFT**

(45) Veröffentlichungstag der Patentschrift:
**31.05.89**

(21) Anmeldenummer: **85112212.7**

(22) Anmeldetag: **26.09.85**

(51) Int. Cl.⁴: **G 11 C 17/00,** G 11 C 5/00,
G 06 K 19/06

(54) **MOS-Schaltung mit einem E2-PROM.**

(30) Priorität: **27.09.84 DE 3435495**

(43) Veröffentlichungstag der Anmeldung:
**23.04.86 Patentblatt 86/17**

(45) Bekanntmachung des Hinweises auf die Patenterteilung:
**31.05.89 Patentblatt 89/22**

(84) Benannte Vertragsstaaten:
**AT CH DE FR GB IT LI NL SE**

(56) Entgegenhaltungen:
**PATENTS ABSTRACTS OF JAPAN, Band 6, Nr. 188
(P-144) 1066 , 28. September 1982, Seite 10 P 144; & JP
- A - 57 98 186**
**ELECTRONICS INTERNATIONAL, Band 55, Nr. 12,
16. Juni 1982, Seiten 147-151, New York, US; W.C.
TOLLEY et al.: "72-K RAM stands up to soft and
hard errors"**

(73) Patentinhaber: **Siemens Aktiengesellschaft Berlin
und München, Wittelsbacherplatz 2, D-8000
München 2 (DE)**

(72) Erfinder: **Schrenk, Hartmut, Dr. Phys.,
Fasanenweg 22, D-8013 Haar (DE)**

## Beschreibung

Die Erfindung betrifft eine monolithisch integrierte MOS-Schaltung mit einem Speicherfeld aus elektrisch programmierbaren Speicherzellen (E²PROM).

Aus der Zeitschrift "Electronics", 28. Feb. 1980, Seite 113 bis 117, ist eine Speicheranordnung mit elektrisch programmierbaren Speicherzellen bekannt, die jeweils ein Steuer- und ein Speichergate (Floating-Gate) aufweisen. Durch Anlegen einer positiven oder negativen Programmierspannung wird dabei eine auf einem Tunneleffekt beruhende Elektronenverschiebung aus bzw. in das Speichergate bewirkt.

Der Speicherinhalt kann mit Hilfe eines elektrooptischen Potential-Sondenverfahrens durch Abtasten des Ladungszustands der Speicherzellen mit Elektronen- oder Röntgenstrahlen und Untersuchung des Potentialkontrastes einer Analyse unterzogen werden, aus welcher direkt oder indirekt Schlüsse auf den Programmierzustand zu ziehen sind.

Es gibt jedoch Anwendungsfälle für Speicherschaltungen, bei welchen eine Offenbarung des Speicherinhalts für Unberechtigte verhindert werden muß. Anwendungsbeispiele dafür sind Sicherheits- und Zugriffssysteme, Abrechnungs- und Registriersysteme und Debit- oder Kreditsysteme, bei welchen sog. Chipkarten eingesetzt werden. Auf jeder dieser Karten sind dabei individuelle Daten gespeichert, die vor jeder Anwendung der Karte geprüft werden, und die einen Mißbrauch der Karte verhindern sollen. Die Möglichkeit einer Analyse des Speicherinhalts in betrügerischer Absicht kann daher die Zuverlässigkeit des betreffenden Systems gefährden.

Der Erfindung lag daher die Aufgabe zugrunde, eine integrierte Schaltung der o.g. Art anzugeben, deren Speicher vor einer elektrooptischen Analyse geschützt ist.

Diese Aufgabe wird gemäß dem kennzeichnenden Teil des Anspruchs 1 gelöst.

Die Erfindung beruht darauf, daß beim Einsatz von Strahlung zumindest ein Teil der Speicherzellen ausgangsseitig auf ein definiertes Potential unabhängig vom Ladungszustand der Speicherzellen geschaltet wird und damit die gespeicherte Information nicht erkennbar ist. Dies wird, dadurch erreicht, daß im Umfeld der Speicherzellen ein- oder mehrere strahlungsempfindliche Sensoren integriert sind, deren Ausgangssignal vorzugsweise zur definierten Festlegung der an den Speicherausgängen anliegenden Spaltenspannung benützt wird. Bei Bestrahlung ändern die Sensoren ihr Ausgangssignal und nehmen Einfluß auf den Pegel der Spaltenleitungen. Das Spaltenleitungspotential wird dabei unabhängig vom Ladungszustand der Speicherzellen. Der Speicherinhalt wird also nicht verändert.

Die Erfindung hat ferner den Vorteil, daß als pn-Dioden ausgebildete Sensoren mit Hilfe standardmäßiger Fertigungsschritte in die allgemein verwendeten n-Kanal-Doppelsilizium-Silicon-Gate-Technik eingebunden werden können.

Weiterbildungen der Erfindung ergeben sich aus den Unteransprüchen.

Im folgenden wird die Erfindung anhand zweier Ausführungsbeispiele weiter beschrieben.

Fig. 1, 2 zeigen jeweils eine erfindungsgemäße Speicherzelle.

Fig 3 zeigt eine Aufsicht auf eine Speicherzelle.

Fig. 4 zeigt einen Querschnitt durch die Speicherzelle gemäß Fig. 3.

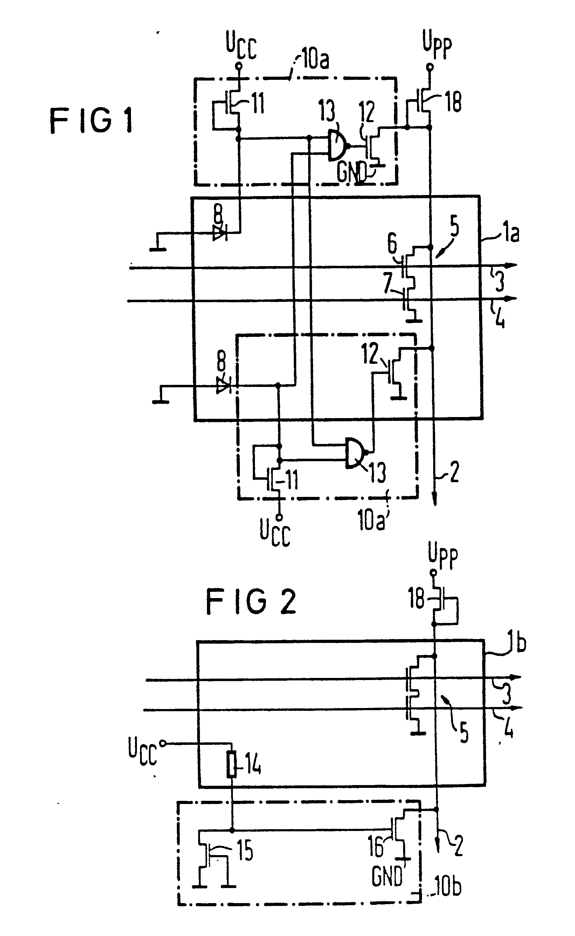

Fig. 1 zeigt ein Speicherfeld 1a mit einer Vielzahl von matrixförmig angeordneten Speicherzellen 5, die jeweils aus einem Auswahltransistor 6 und einem in Reihe geschalteten Speichertransistor 7 vom Floating-Gate-Typ bestehen. Alle Auswahltransistoren 6 einer Zeile sind über eine Auswahlleitung 3 und alle Speichertransistoren 7 über eine Programmierleitung 4 ansteuerbar. Die Speicherzellen 5 werden spaltenweise über eine Spaltenleitung 2 ausgelesen, die über einen Lasttransistor 18 an einer ersten Betriebsspannung $U_{pp}$ liegt.

Das Speicherfeld 1a ist ferner mit strahlungsempfindlichen Sensoren (8) bestückt, die im Wiedergegebenen Beispiel aus zwei Photodioden 8 bestehen. Zwischen den Dioden 8 und mindestens einer Spaltenleitung 2 liegen Sperrschaltungen 10a. Bei Ansteuerung durch die Sensoren unterdrücken sie jeden Auslesevorgang auf der zugehörigen Spaltenleitung 2.

Im regulären Betriebszustand, d.h. ohne daß das Speicherfeld 1a einer Strahlung ausgesetzt ist, sind die Dioden 8 durch eine zweite Betriebsspannung $U_{cc}$ von einigen Volt gesperrt und schwach leitend. Die Ausgangsspannungen der Dioden 8 liegen dabei wegen eines Lasttransistors 11 vom selbstleitenden oder selbstsperrenden Typ auf log. 1. Bei Licht- oder Strahlungseinwirkung werden entlang einer pn-Grenze der Dioden 8 Ladungsträgerpaare erzeugt, die einen Diodenstrom bewirken und die Ausgangsspannungen der Sensoren auf log. Null legen.

Das Ausgangssignal einer jeden Diode 8 wird invertiert an das Steuergate mindestens eines weiteren selbstsperrenden Transistors 12 geführt, der mit einer Spaltenleitung 2 verbunden ist. Bei Strahlungseinfall erhalten diese Transistoren 12 eine positive Steuerspannung und werden leitend. Sie schalten die Spaltenpotentiale auf log. Null, solange die Strahlung anhält. Jeder Spaltenleitung 2 sind ein oder mehrere der weiteren Transistoren 12 zugeordnet. Sind mehrere Dioden 8 bzw. weitere Transistoren 12 im Speicherfeld 1a angeordnet, so werden die Ausgangssignale aller Dioden 8 über NAND-Gatter 13 invertiert und zusammengeklammert an die weiteren Transistoren 12 gelegt. Die Inverter besitzen vorteilhafterweise auch eine Verstärker- und/oder eine Schmitt-Trigger-Funktion.

In dem Ausführungsbeispiel der Fig. 2 mit einem Speicherfeld 1b ist der Sensor durch einen Photowiderstand 14 und die Sperrschaltung 10b durch einen von einem selbstleitenden Transistor 15 angesteuerten Transistor 16 realisiert. Solange der Photowiderstand 14 keiner Bestrahlung ausgesetzt ist, ist er schwachleitend. In diesem Zustand wird der Steuereingang des Transistors 16 durch den selbstleitenden Transistor 15 auf Masse gezogen und gesperrt. Bei einer harten Einstrahlung und Photoleitung wird der Steuereingang des Transistor 16 über den Photowiderstand 14 mit einer Betriebsspannung $U_{cc}$ verbunden und leitend geschaltet, wobei die Spaltenleitung 2 durch seine gesteuerte Strecke auf Masse gezogen wird. Der Photowiderstand 14 läßt sich mit Standardtechnik auch als Polysilicium-Bahnwiderstand ausführen

Als Sensoren sind beispielsweise auch Photothyristoren geeignet.

Um bereits bei einer Teilbestrahlung des Speicherfeldes 1a, 1b eine Sperrung der Auslesevorgänge zu erreichen, sind - wie das Beispiel der Fig. 1 zeigt - mehrere Sensoren (Photodioden 8, Photowiderstand 14) und zugehörige Sperrschaltungen vorgesehen und unabhängig voneinander verschaltet. Die Sensoren sind innerhalb des Speicherfeldes 1a, 1b geometrisch verteilt angeordnet. Mehrere Sensoren wirken dabei über eine log. Verknüpfung, im Beispiel gemäß Fig. 1 über die beiden NAND-Gatter 13 auf die Sperrschaltung 10a, 10b bzw. Spaltenleitung 2.

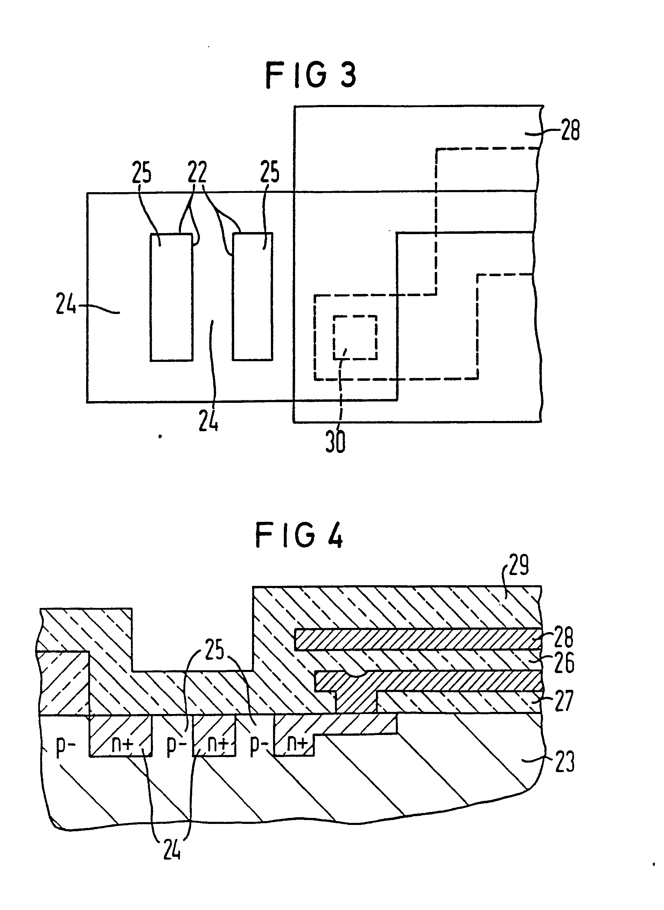

Aus den Figuren 3 und 4 ist der Aufbau einer Diode 8 und des zugehörigen Lasttransistors 11 wiedergegeben. Die Herstellung einer pn-Diode kann mit Hilfe standardmäßiger Fertigungsschritte in die allgemein verwendete n-Kanal-Doppelsilizium-Silicon-Gate-Technik eingebunden werden. Zur Erhöhung der Strahlungsempfindlichkeit weist eine derartige Diode vorteilhafterweise eine Finger- bzw. Streifenstruktur mit erhöhter Länge der pn-Grenze 22 auf. Gemäß dem Beispiel werden auf ein p-Substrat 23 mit einer ersten Maske n+ -dotierte Zonen 24 mittels einer üblichen Source-Drain-Dotierung erzeugt. Die p-Bereiche 25 der Photodiode sind gegen die Source-Drain-Belegung geschützt und behalten den Dotierungstyp des Grundmaterials.

Die p-Gebiete 25 der Kathode der Photodiode sind über das Substrat 23 mit einem Massepotential beaufschlagt. Oberhalb der p-Bereiche 25 der Diode ist eine Siliciumoxidschicht 26 entfernt. Die Anordnung wird nach außen ganzflächig mit einer Siliciumnitridschicht 29 abgeschlossen. Ferner werden die Zuleitungen des Lasttransistors 11 und alle die Sperrschaltung 10a, b betreffenden Zuleitungen über eine Silicium-Schicht 27 und sog. Burried-Kontakte 30 angeschlossen und verbunden. Sie werden von einer weiteren, darüber liegenden Poly-Silicium-Schicht 20 nach außen abgeschirmt.

## Patentansprüche

1. Monolithisch integrierte MOS-Schaltung mit einem Speicherfeld (1a, b) auf elektrisch programmierbarer Speicherzellen z. B. E²PROMs (5), <u>dadurch gekennzeichnet</u>, daß der Ausgang wenigstens einer Speicherzelle (5) unter Steuerung mindestens eines strahlungsempfindlichen Sensors (8, 14) mittels mindestens einer Sperrschaltung (10a, b) auf ein vorgegebenes Potential legbar ist.

2. MOS-Schaltung nach Anspruch 1, <u>dadurch gekennzeichnet</u>, daß die Sperrschaltung (10a, b) aus einem Transistor (12, 16) besteht, dessen gesteuerte Strecke zwischen dem Ausgang der Speicherzelle (5) und dem vorgegebenen Potential (GND), und dessen Steuereingang am Sensor (8, 14) liegt.

3. MOS-Schaltung nach einem der Ansprüche 1 oder 2, <u>dadurch gekennzeichnet</u>, daß mehrere Sensoren (8, 14) und zugehörige Sperrschaltungen (10a, b) voneinander unabhängig ausgeführt und zumindest die Sensoren (8, 14) geometrisch verteilt im Bereich des Speicherfeldes (1a, b) angeordnet sind.

4. MOS-Schaltung nach einem der vorhergehenden Ansprüche, <u>dadurch gekennzeichnet</u>, daß die Ausgänge mehrerer Sensoren (8, 14) über eine logische ODER-Verknüpfung auf mindestens eine der Sperrschaltungen (10a, b) geführt sind.

5. MOS-Schaltung nach Anspruch 4, <u>dadurch gekennzeichnet</u>, daß die log. Verknüpfung Verstärker- und Schmitt-Trigger-Eigenschaften aufweist.

6. MOS-Schaltung nach einem der vorhergehenden Ansprüche, <u>gekennzeichnet durch</u> eine ganzflächige Abdeckung des Speicherfelds (1a, b) und der Sensoren mit einer lichtundurchlässigen Passivierungsschicht.

## Claims

1. Monolithic integrated MOS circuit incorporating a memory array (1a, b) composed of electrically programmable memory cells (5), for example EEPROMs, characterized in that the output of at least one memory cell (5) can be connected to a predetermined potential by means of at least one blocking circuit (10a, b) under the control of at least one radiation sensitive sensor (8, 14).

2. MOS circuit according to Claim 1, characterized in that the blocking circuit (10a, b) comprises a transistor (12, 16) whose controlled section is between the output of the memory cell (5) and the predetermined potential (GND) and whose control input is connected to the sensor (8, 14).

3. MOS circuit according to one of the Claims 1 or 2, characterized in that several sensors (8, 14) and associated blocking circuits (10a, b) are constructed independently of each other and at least the sensors (8, 14) are disposed in a geometrically distributed manner in the region of the memory array (1a, b).

4. MOS circuit according to one of the preceding claims, characterized in that the outputs of several sensors (8, 14) are routed via a logical OR interconnection to at least one of the blocking circuits (10a, b)

5. MOS circuit according to Claim 4, characterized in that the logical interconnection has amplifier and Schmitt-trigger characteristics.

6. MOS circuit according to one of the preceding Claims, characterized by a full-surface covering of the memory array (1a, b) and of the sensors with an opaque passivation film.

**Revendications**

1. Circuit MOS intégré monolithiquement, avec une zone de mémoire (1a, b) constituée par des cellules de mémoire programmables électriquement, par exemple des cellules EEPROM (5), caractérisé par le fait que la sortie d'au moins une cellule de mémoire (5) est susceptible d'être amenée à un potentiel prédéterminé, à l'aide d'au moins un circuit de blocage (10a, b), avec commande d'au moins un capteur (8, 14) sensible à un rayonnement.

2. Circuit MOS selon la revendication 1, caractérisé par le fait que le circuit de blocage (10a, b) est constitué par un transistor (12, 16), dont la piste commandée est située entre la sortie de la cellule de mémoire (5) et le potentiel prédéterminé (GND), et dont l'entrée de commande est reliée au capteur (8, 14).

3. Circuit MOS selon l'une des revendications 1 ou 2, caractérisé par le fait que plusieurs capteurs (8, 14) et des circuits de blocage associés (10a, b) sont réalisés indépendamment l'un de l'autre, au moins les capteurs (8, 14) étant répartis géométriquement dans la plage de la zone de mémoire (1a, 1b).

4. Circuit MOS selon l'une des revendications précédentes, caractérisé par le fait que les sorties de plusieurs capteurs (8, 14) sont reliées par l'intermédiaire d'un circuit logique OU, à au moins l'un des circuits de blocage (10a, b).

5. Circuit MOS selon la revendication 4, caractérisé par le fait que le circuit logique possède les propriétés d'un amplificateur et d'une bascule de Schmitt.

6. Circuit MOS selon l'une des revendications précédentes caractérisé par une couche de couverture à surface totale de la zone de mémoire (1a, b) et des capteurs, faite avec une couche de passivation opaque à la lumière.

FIG 1

FIG 2

# FIG 3

28

25  22  25

24

24

30

# FIG 4

29

25

28
26

27

p-  n+  p-  n+  p-  n+

23

24